# EUROPÄISCHE PATENTSCHRIFT

(11) **EP 2 686 362 B1**
(45) Veröffentlichungstag und Bekanntmachung des Hinweises auf die Patenterteilung: **14.01.2015**
(21) Anmeldenummer: 12708548.8
(22) Anmeldetag: 15.03.2012
(51) Int. Cl.: C08G 18/16, C08G 18/20, C08G 18/22, C08G 18/62, C08G 18/79, C09D 175/04

(54) **ZINK-IMIDAZOL-CARBOXYLAT-KOMPLEX KATALYSIERTE BESCHICHTUNGSMITTELZUSAMMENSETZUNG**
ZINC-IMIDAZOLE-CARBOXYLATE-COMPLEX-CATALYSED COATING AGENT COMPOSITION
COMPOSITION D'AGENT DE REVÊTEMENT CATALYSÉE PAR UN COMPLEXE DE ZINC-IMIDAZOLE-CARBOXYLATE

(30) Priorität: 18.03.2011 EP 11158846; 18.03.2011 US 201161453986 P
(43) Veröffentlichungstag der Anmeldung: 22.01.2014
(73) Patentinhaber: BASF Coatings GmbH, 48165 Münster (DE)
(72) Erfinder: WESTHOFF, Elke, 48565 Steinfurt (DE); HOFFMANN, Peter, 48308 Senden (DE); MÖLLER, Bernadette, 48734 Maria-Veen (DE); SCHNIER, Benedikt, 48231 Warendorf (DE)
(74) Vertreter: Leifert & Steffan
(86) Internationale Anmeldenummer: PCT/EP2012/054546
(87) Internationale Veröffentlichungsnummer: WO 2012/126796

(56) Entgegenhaltungen:
- EP-A2- 0 882 748
- US-A- 4 006 124
- US-A1- 2006 247 341

## Beschreibung

Die Erfindung betrifft Beschichtungsmittelzusammensetzungen, enthaltend eine Isocyanatgruppen-haltige Komponente, eine Hydroxylgruppen-haltige Komponente und einen Zink-Imidazol-Carboxylat-Komplex, sowie die Verwendung eines Zink-Imidazol-Carboxylat-Komplexes als Katalysatorsystem für die Urethanreaktion in Beschichtungsmittelzusammensetzungen.

Zwei Komponenten-Polyurethansysteme finden als Lacke, Schaumstoffe, Fasern und nicht poröse Formkörper breite Anwendung. Sofern die Vernetzungpartner bereits bei Raumtemperatur reaktiv sind, wird das Polymer durch Mischen und anschließende Reaktion einer Isocyanatgruppen-haltigen Komponente mit einer Hydroxylgruppen-haltigen Komponente erhalten. Häufig wird dabei die Reaktion der Isocyanatgruppe mit der Hydroxylgruppe unter Zusatz basischer Verbindungen, wie tertiärer Amine oder Amidingruppen-haltiger Verbindungen katalysiert. Beispiele für solche Verbindungen sind 1,4-Diazabicyclo[2.2.2]octan oder 1,8-Diazabicyclo[5.4.0] undec-7-en (DBU). Eine deutlich höhere katalytische Wirkung besitzen jedoch metallorganische Verbindungen, wie Dibutylzinndilaurat oder verschiedene Zinkcarboxylate. Die Menge des eingesetzten Katalysators ist zum einen dadurch bestimmt, für den Anwendungsbereich eine ausreichend lange Verarbeitungszeit zu gewährleisten, zum anderen dadurch, nach der Applikation möglichst früh ein für die Nachbearbeitung ausreichendes Eigenschaftsprofil zu erreichen. Insbesondere ist es für die Autoreparaturlackierung wichtig, eine schnelle Montagefestigkeit zu erreichen.

Die aus dem Stand der Technik gut bekannten Katalysatoren auf Zinnbasis, wie Dibutylzinndilaurat, Dioctylzinndilaurat, Dibutylzinndiacetat, Dibutylzinnmaleat oder Tetrabutylstannoxandiacetat, stellen gute Katalysatoren für die Bildung der Urethanbindung dar, jedoch sind diese Verbindungen toxisch. Aufgrund der Toxizität vieler Zinnverbindungen wird schon seit langem versucht, für Beschichtungsmittelzusammensetzungen geeignete Ersatzkatalysatoren zu finden.

In dem Artikel "Catalysis of the Isocyanate-Hydroxyl Reaction by Non-Tin Catalysts" von Werner J. Blank, Z.A. He und Ed. T. Hessell der Firma King Industries Inc. werden daher Alternativen zu den üblichen zinnhaltigen Katalysatoren auf Basis verschiedener Metallsalze und Metallkomplexe, wie Zirkoniumchelate, Aluminiumchelat und Wismutcarboxylat, beschrieben.

In der WO 2009/135600 werden Katalysatoren auf Basis von N-heterocyclischen Carbenen zur Synthese von Polyurethanen beschrieben. In der EP 1 460 094 werden Katalysatoren auf Basis von Metallsalzen in Verbindung mit bicyclischen tertiären Aminverbindungen und einem quartären Ammoniumsalz offenbart. In der US 4,006,124 werden allgemeine Amidin-Metall-Komplexe als Katalysatoren für die Isocyanatpolyadditionsreaktion beschrieben. Die WO 2004/029121 offenbart die Verwendung von Säuren mit einem pKs-Wert zwischen 2,8 und 4,5 als Katalysatoren für die Urethanreaktion. All diesen Katalysatoren ist gemeinsam, dass sie entweder zu einer zu langsamen Aushärtung des Beschichtungssystems führen oder jedoch zu einer verkürzten Arbeitszeit (Pot Life). Außerdem führen eine Reihe der oben genannten Katalysatoren zu eine Verfärbung der Lacke bzw. verursachen eine nachträglichen Vergilbung der applizierten Lacke. Derartige Verbindungen sind für hochwertige Klarlacksysteme ungeeignet. Zusätzlich beschreiben die oben genannten Schriften auch Cadmium und bleihaltige Katalysatoren, die aufgrund Ihrer Toxizität auch als Alternative zu Zinn-basierten Katalysatoren ausscheiden. Die in den oben genannten Schriften beschriebenen Wismut- oder Zirkonium-basierten Katalysatoren sind hydrolyseempfindlich und sollten deshalb nur im Härter angelöst werden. Aufgrund der Hydrolyseempfindlichkeit besitzen Beschichtungssysteme auf der Basis von Wismut- und Zirkoniumkatalysatoren außerdem eine geringe Lagerstabilität.

Wie bereits oben beschrieben, können auch Amine katalysierend auf die Polyurethanreaktion wirken. Allerdings ist deren Pot Life für die Verarbeitung im Autoreparaturbereich nicht ausreichend. Aufgrund des hohen Dampfdruckes niedermolekularer Amine kommen für diese Anwendung, wenn überhaupt, nur Amine, wie Diazabicycloundecen (DBU) oder Diazabicyclononen (DBN), in Frage. Der Einsatz dieser Amine führt allerdings zu stark gefärbten Mischungen und die resultierenden katalysierten Lacksysteme neigen zu einer inakzeptablen Vergilbung.

In US 2006/0036007 werden organometallische Komplexe als Katalysatoren für die Vernetzung von Polyurethan-basierten Systemen offenbart. Dabei werden vor allem Amidin-Verbindungen des Zinks für die Katalyse der Reaktion Hydroxylgruppenhaltiger Komponenten mit Isocyanatgruppen-haltigen Komponenten beschrieben. Dabei sollen diese Katalysatoren auf pyrogenem Siliziumdioxid adsorbiert sein. In US 2006/0247341 und US 2009/0011124 werden ebenfalls Amidin-Zink-Komplexe als Katalysatoren in 2-Komponenten-Polyurethanbeschichtungssystemen verwendet. Diese Katalysatoren sollen dabei besonders hydrolysestabil sein und sich auch für den Einsatz in wässrigen Systemen eignen. Doch weisen die in diesen drei Dokumenten offenbarten Katalysatorensysteme keine ausreichenden Härtungseigenschaften auf. Der Vergleich der Reaktivität dieser Systeme mit zinnkatalysierten Systemen zeigt, dass diese Zink-Amidin-basierten Katalysatoren schlechtere Härtungseigenschaften bei gleicher Verarbeitungszeit aufweisen.

Die der Erfindung zugrundeliegende Aufgabe besteht darin, Beschichtungssysteme mit geeigneten Katalysatoren bereitzustellen, die sowohl eine schnelle Härtung des Systems zeigen als auch andererseits eine lange Verarbeitungszeit aufweisen. Zudem sollen die Lacksysteme dem Verwender eine schnelle Weiterverarbeitung der damit lackierten Oberflächen/Gegenstände ermöglichen. Außerdem sollen diese Systeme keine Farbveränderungen vor und nach der Aushärtung aufzeigen. Besonders im Bereich von Klarlacken in der Automobilindustrie bestehen hohe Anforderungen an die Eigenfarbe der Systeme. So darf der Katalysator weder eine Eigenfarbe aufweisen, noch darf er mit den üblichen Lackkomponenten zu einer Verfärbung bei der Anmischung oder der Aushärtung des Lackes führen. Des Weiteren sollte dem Beschichtungssystem der Katalysator von vornherein zugegeben werden können. Jedoch soll die Beimischung des Katalysators zu den Beschichtungssystemen von Anfang an nicht die Lagerstabilität der Beschichtungszusammensetzung negativ beeinflussen. Zudem sollte der Katalysator hydrolyseunempfindlich sein, da selbst in organisch gelösten Systemen die üblicherweise hohe Konzentration an Hydroxylgruppen zu einer Reduzierung der Katalysatoraktivität über die Lagerzeit führen kann. Speziell im Bereich der Autoreparaturlackierung ist eine extrem hohe Lagerstabilität auch bei höheren Temperaturen von Vorteil.

Überraschenderweise wurde gefunden, dass die erfindungsgemäße Aufgabe durch eine Beschichtungsstoffzusammensetzung gelöst wird, welche
- mindestens eine Polyhydroxylgruppen-haltige Komponente (A),
- mindestens eine Polyisocyanatgruppen-haltige Komponente (B),
- mindestens einen Zink-Imidazol-Carboxylat-Komplex (D) herstellbar durch Umsetzung mindestens eines Zn(II)biscarboxylates mit einem oder mehreren Imidazolen der allgemeinen Formel (I) 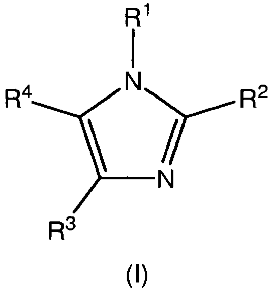 worin
   R¹ für einen acyclischen oder cyclischen, gesättigten oder ungesättigten Kohlenwasserstoffrest, einen aromatischen Kohlenwasserstoffrest oder einen Rest R^{v}-Aryl steht, wobei R^{v} für einen Alkylenrest und Aryl für einen aromatischen Rest steht,
   R², R³ und R⁴ unabhängig voneinander für Wasserstoff, einen acyclischen oder cyclischen, gesättigten oder ungesättigten Kohlenwasserstoffrest, einen aromatischen Kohlenwasserstoffrest oder einen Rest R^{v}-Aryl stehen, wobei R^{v} für einen Alkylenrest und Aryl für einen aromatischen Rest steht, mit der Maßgabe, dass
   Zink-(1-Methylimidazol)-bis(2-Ethylhexanoat)-Komplexe (D), die durch Umsetzung von Zink(II)bis(2-Ethylhexanoat) mit 1-Methylimidazol in einem Molverhältnis von 1 zu ≤ 2,2 erhältlich sind, ausgeschlossen sind, und mindestens eine monomere aromatische Carbonsäure (S), bei der die Carboxylgruppe in Konjugation zu einem pi-Elektronensystem steht, enthält. Durch die Verwendung eines Katalysatorsystems umfassend mindestens einen wie oben definierten Zink-Imidazol-Carboxylat-Komplex (D) und mindestens eine monomere aromatische Carbonsäure (S), bei der die Carboxylgruppe in Konjugation zu einem pi-Elektronensystem steht, in Beschichtungsmittel mit mindestens einer Polyisocyanatgruppen-haltigen Komponente und mindestens einer Polyhydroxylgruppen-haltigen Komponente weisen die entsprechenden Beschichtungssysteme ausgezeichnete Härtungseigenschaften, eine frühe Bearbeitbarkeit und eine erhöhte Verarbeitungszeit auf, zudem sind diese Katalysatorsysteme hydrolyseunempfindlich und zeigen keine Verfärbung oder Vergilbung des Beschichtungssystems.

### Detaillierte Beschreibung

Die vorliegende Erfindung betrifft Beschichtungsmittelzusammensetzungen, enthaltend
- mindestens eine Polyhydroxylgruppen-haltige Komponente (A),
- mindestens eine Polyisocyanatgruppen-haltige Komponente (B),
- mindestens einen Zink-Imidazol-Carboxylat-Komplex (D) herstellbar durch Umsetzung mindestens eines Zn(II)biscarboxylates mit einem oder mehreren Imidazolen der allgemeinen Formel (I) 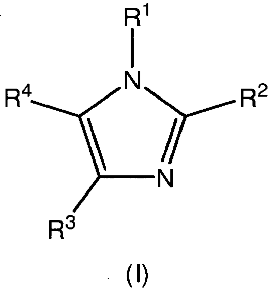 worin
   R¹ für einen acyclischen oder cyclischen, gesättigten oder ungesättigten Kohlenwasserstoffrest, einen aromatischen Kohlenwasserstoffrest oder einen Rest R^{v}-Aryl steht, wobei R^{v} für einen Alkylenrest und Aryl für einen aromatischen Rest steht,
   R², R³ und R⁴ unabhängig voneinander für Wasserstoff, einen acyclischen oder cyclischen, gesättigten oder ungesättigten Kohlenwasserstoffrest, einen aromatischen Kohlenwasserstoffrest oder einen Rest R^{v}-Aryl stehen, wobei R^{v} für einen Alkylenrest und Aryl für einen aromatischen Rest steht, mit der Maßgabe, dass Zink-(1-Methylimidazol)-bis(2-Ethylhexanoat)-Komplexe (D), die durch Umsetzung von Zink(II)bis(2-Ethylhexanoat) mit 1-Methylimidazol in einem Molverhältnis von 1 zu ≤ 2,2 erhältlich sind, ausgeschlossen sind, und
- mindestens eine monomere aromatische Carbonsäure (S), bei der die Carboxylgruppe in Konjugation zu einem pi-Elektronensystem steht.

Als die mindestens eine Polyhydroxylgruppen-haltige Komponente (A) können alle dem Fachmann bekannten Verbindungen eingesetzt werden, welche mindestens 2 Hydroxylgruppen pro Molekül aufweisen und oligomer und/oder polymer sind.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100000 Dalton, insbesondere zwischen 1000 und 50000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate.

Die Polyole weisen bevorzugt eine OH-Zahl von 30 bis 400 mg KOH/g, insbesondere zwischen 100 und 300 mgKOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Poly(meth)acrylatpolyole sind in der Regel Copolymerisate und weisen vorzugsweise massenmittlere Molekulargewichte Mw zwischen 1000 und 20000 Dalton, insbesondere zwischen 1500 und 10000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -50 und 80 °C (gemessen mittels DSC-Messungen nach DIN-EN-ISO 11357-2).

Die Poly(meth)acrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Bevorzugt werden Poly(meth)acrylatpolyole und/oder Polyesterharze, besonders bevorzugt Poly(meth)acrylatpolyole als Polyhydroxylgruppen-haltige Komponente (A) eingesetzt.

Als die mindestens eine Polyisocyanatgruppen-haltige Komponente (B) sind an sich bekannte substituierte oder unsubstituierte aromatische, aliphatische, cycloaliphatische und/oder heterocyclische Polyisocyanate geeignet. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Bevorzugte Polyisocyanate sind auch die Biuret-Dimere und die Isocyanurat-Trimere der vorgenannten Diisocyanate. Besonders bevorzugte Polyisocyanate (B) sind Hexamethylen-1,6-diisocyanat, Isophorondiisocyanat und 4,4'-Methylendicyclohexyldiisocyanat, deren Biuret-Dimere und/oder deren Isocyanurat-Trimere und/oder deren asymmetrische Trimere, wie z.B. das im Handel unter der Bezeichung Desmodur^{®}XP2410 erhältliche asymmetrische HDI-Trimer.

Überdies können aber auch die an sich bekannten Folgeprodukte der vorgenannten organischen aliphatischen, cycloaliphatischen, aromatischen oder heterocyclischen Polyisocyanate mit Carbodiimid-, Uretonimin-, Uretdion-, Allophanat-, Biuret- und/oder Isocyanurat-Struktur, sowie Prepolymere, die durch Umsetzung des Polyisocyanats mit Verbindungen mit gegenüber Isocyanatgruppen reaktiven Wasserstoffen erhalten werden, eingesetzt werden.

Die Polyisocyanatgruppen-haltige Komponente (B) kann in einem geeigneten Lösemittel vorliegen. Geeignete Lösemittel sind solche, die eine ausreichende Löslichkeit der Polyisocyanatkomponente ermöglichen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, n-Hexan, Cyclohexan, Solventnaphtha, 2-Methoxypropylacetat (MPA), und Ethylethoxypropionat.

Die erfindungsgemäßen Beschichtungsmittel können ggf. außer der Polyhydroxylgruppen-haltigen Komponente (A) noch ein oder mehrere, von der Komponente (A) verschiedene, Hydroxylgruppen-haltige Verbindungen (C) enthalten. Bevorzugt nehmen diese Verbindungen (C) einen Anteil von 1 bis 20 Gew.-% besonders bevorzugt von 1 bis 10 Gew.-%, ganz besonders bevorzugt von 1 bis 5 Gew.-%, jeweils bezogen auf den Bindemittelgehalt des Beschichtungsmittels, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt.

Die Polyhydroxygruppen-haltige Komponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolaction, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA)) und Ethylethoxypropionat und deren Gemische. Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dabei unterscheiden sich die als Reaktivverdünner geeigneten Lösemittel in dieser Anmeldung von der Polyhydroxylgruppen-haltigen Komponente (A) und (C). Die als Reaktivverdünner geeigneten Lösemittel sind Monomere und können beispielsweise niedermolekulare Diamine (z.B. Ethylendiamin) sein.

Der mindestens eine wie oben definierte Zink-Imidazol-Carboxylat-Komplex (D) ist ein Komplex aus Zink(II) mit den Imidazolen der allgemeinen Formel (I) und Carboxylat als Liganden, wobei Zink-(1-Methylimidazol)-bis(2-Ethylhexanoat)-Komplexe (D), die durch Umsetzung von Zink(II)bis(2-Ethylhexanoat) mit 1-Methylimidazol in einem Molverhältnis von 1 zu ≤ 2,2 erhältlich sind, von der Definition ausgeschlossen sind.

Für die Imidazole der allgemeinen Formel (I) 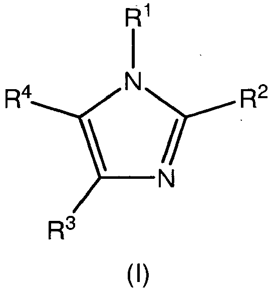 gilt unter der Maßgabe der obigen allgemeinen Definition vorzugsweise, dass
R¹ für einen gesättigten oder ungesättigten, geradkettigen oder verzweigten Kohlenwasserstoffrest mit bis zu 20 Kohlenstoffatomen, einen 5- oder 6-gliedrigen aromatischen Kohlenwasserstoffrest mit bis zu 10 Kohlenstoffatomen oder einen Rest R^{v}-Aryl steht, wobei R^{v} für einen Alkylenrest mit 1 bis 6 Kohlenstoffatomen und Aryl für einen 5- oder 6-gliedrigen aromatischen Ring mit bis zu 10 Kohlenstoffatomen steht, und wobei sämtliche vorgenannten Reste optional Heteroatome wie beispielsweise Sauerstoff, Schwefel oder Stickstoff enthalten können,
R², R³ und R⁴ unabhängig voneinander für Wasserstoff, einen gesättigten oder ungesättigten, geradkettigen oder verzweigten Kohlenwasserstoffrest mit bis zu 20 Kohlenstoffatomen, einen 5- oder 6-gliedrigen aromatischen Kohlenwasserstoffrest mit bis zu 10 Kohlenstoffatomen oder einen Rest R^{v}-Aryl steht, wobei R^{v} für einen Alkylenrest mit 1 bis 6 Kohlenstoffatomen und Aryl für einen 5- oder 6-gliedrigen aromatischen Ring mit bis zu 10 Kohlenstoffatomen steht, und wobei sämtliche vorgenannten Reste optional Heteroatome wie beispielsweise Sauerstoff, Schwefel oder Stickstoff enthalten können.

Besonders bevorzugt steht R¹ für einen gesättigten, geradkettigen oder verzweigten Alkylrest mit bis zu 12 Kohlenstoffatomen, ganz besonders bevorzugt bis zu 6 Kohlenstoffatomen, einen 5- oder 6-gliedrigen aromatischen Kohlenwasserstoffrest mit bis zu 6 Kohlenstoffatomen, ganz besonders bevorzugt 3 bis 6 Kohlenstoffatomen oder einen Rest R^{v}-Aryl, wobei R^{v} bevorzugt für einen Alkylenrest mit 1 oder 2 Kohlenstoffatomen und Aryl für einen 5- oder 6 gliedrigen aromatischen Rest mit 3 bis 6 Kohlenstoffatomen steht, und wobei sämtliche vorgenannten Reste optional Heteroatome wie beispielsweise Sauerstoff, Schwefel oder Stickstoff enthalten können.

Unabhängig voneinander stehen die Reste R², R³ und R⁴ bevorzugt für Wasserstoff oder für einen gesättigten, geradkettigen oder verzweigten Alkylrest mit bis zu 12 Kohlenstoffatomen, ganz besonders bevorzugt bis zu 6 Kohlenstoffatomen, einen 5- oder 6-gliedrigen aromatischen Kohlenwasserstoffrest mit bis zu 10 Kohlenstoffatomen, ganz besonders bevorzugt 3 bis 6 Kohlenstoffatomen oder einen Rest R^{v}-Aryl, wobei R^{v} bevorzugt für einen Alkylenrest mit 1 oder 2 Kohlenstoffatomen und Aryl für einen 5- oder 6-gliedrigen aromatischen Ring mit 3 bis 6 Kohlenstoffatomen steht, und wobei sämtliche vorgenannten Reste optional Heteroatome wie beispielsweise Sauerstoff, Schwefel oder Stickstoff enthalten können. Ganz besonders bevorzugt stehen die Reste R³ und R⁴ für Wasserstoff.

Generell gilt, dass an 1-Stellung monosubstiuierte Imidazole (R² = R³ = R⁴ = H) und an 1- und 2-Stellung disubstituierte Imidazole (R² ≠ H, R³ = R⁴ = H) bevorzugt sind.

Unter den in 1-Stellung monosubstituierten Imidazolen werden ganz besonders bevorzugt 1-Alkylimidazole (R¹ = Alkyl, R² = R³ = R⁴ = H), worin der Alkylrest vorzugsweise 1 bis 6 Kohlenstoffatome aufweist (beispielsweise Methyl, Ethyl, n-Propyl, iso-Propyl, n-Butyl, iso-Butyl, tert-Butyl, Pentyl, Hexyl), 1-Arylimidazole (R¹ = Aryl, R² = R³ = R⁴ = H), worin der Arylrest ein 5- oder 6-gliedriger aromatischer Rest mit 3 bis 6 Kohlenstoffatomen, beispielsweise ein Phenylrest ist oder 1-Aralkylimidazole (R¹ = Aralkyl = R^{v}-Aryl, R² = R³ = R⁴ = H), worin R^{v} für CH₂ und Aryl für einen 5- oder 6-gliedrigen aromatischen Ring mit 3 bis 6 Kohlenstoffatomen steht, beispielsweise einen Imidazolrest oder Phenylrest, eingesetzt.

Beispiele besonders geeigneter in 1-Stellung monosubstituierter Imidazole sind 1-Methylimidazol, 1-Ethylimidazol, 1-Propylimidazol, 1-Butylimidazol, 1-Phenylimidazol und 1,1-Methylen-bis-imidazol.

Unter den an 1- und 2-Stellung disubstituierten Imidazolen sind insbesondere 1,2-Dialkylimidazole, wie beispielsweise 1,2-Dimethylimidazol, besonders bevorzugt. Wie oben beschrieben können sämtliche vorgenannten Reste R¹, R², R³ und R⁴ optional Heteroatome wie beispielsweise Sauerstoff, Schwefel oder Stickstoff enthalten. In aliphatischen Resten kann Sauerstoff beispielsweise als Ethersauerstoff zwischen zwei Kohlenstoffatomen vorliegen oder in Form einer Estergruppe. Der Begriff der aromatischen Reste bzw. Aryl-Reste umfasst hierin in seiner weitesten Definition somit auch heteroaromatische Reste bzw. Heteroaryl-Reste wie beispielsweise Imidazolreste. In gleicher Weise umfasst der Begriff des aliphatischen Rests auch heteroaliphatische Reste.

In jeder der oben genannten Definitionen der Reste R¹, R², R³ und R⁴ können die Reste substituiert oder unsubsituiert vorliegen. Liegen die Reste substituiert vor, so sind typische Substituenten beispielsweise Hydroxylgruppen, Thiolgruppen, primäre und sekundäre Aminogruppen, Estergruppen oder Halogene wie Chlor oder Fluor. Ein Beispiel für einen OH-substituierten Alkylrest ist ein Hydroxyalkylrest wie im 1-Hydroxyethyl-imidazol. Bevorzugt liegen die Reste R¹, R², R³ und R⁴ jedoch unsubstituiert vor.

Die Zink-Imidazol-Carboxylat-Komplexe (D) sind herstellbar durch Umsetzung mindestens eines Zn(II)biscarboxylates mit einem oder mehreren der oben genannten Imidazole.

Als Zn(II)biscarboxylate sind insbesondere solche geeignet, bei welchen die Carboxylat-Reste, gewählt sind aus den linearen oder verzweigten aliphatischen, gegebenenfalls substituierten Monocarbonsäuren mit bis zu 12 Kohlenstoffatomen und/oder aromatischen, gegebenenfalls substituierten Monocarbonsäuren mit 6 bis 12 Kohlenstoffatomen im aromatischen Rest. Der Carboxylatrest bestimmt im Wesentlichen die Löslichkeit des resultierenden Komplexes in den weiteren Komponenten der erfindungsgemäßen Beschichtungsmittelzusammensetzung. Ganz besonders bevorzugt werden daher in den erfindungsgemäßen Beschichtungsmittelzusammensetzungen solche Zink-Imidazol-Carboxylat-Komplexe (D), in denen das Carboxylat eine lineare oder verzweigte aliphatische Monocarbonsäure, insbesondere ein verzweigtes oder unverzweigtes Alkanoat mit 6 bis 10 Kohlenstoffatomen wie beispielsweise ein 2-Ethylhexanoat, ist.

Die Herstellung der Zink-Imidazol-Carboxylat-Komplexe (D) kann durch Umsetzung mindestens eines Zn(II)biscarboxylates mit einem oder mehreren der oben genannten Imidazole erfolgen. Bis zu vier Mol eines Imidazols oder einer Mischung aus zwei oder mehr Imidazolen können so mit einem Mol des Zn(II)biscarboxylates umgesetzt werden.

Die Umsetzung des beziehungsweise der Zink(II)biscarboxylate mit dem Imidazol oder der Imidazolmischung erfolgt üblicherweise in einem Lösemittel. Als Lösemittel kommen hierbei insbesondere solche Lösemittel zum Einsatz, die eine ausreichende Löslichkeit der Zink(II)biscarboxylate und Imidazole sowie der resultierenden Zink-Imidazol-Carboxylat-Komplexe (D) ermöglichen. Vorzugsweise sind diese frei von gegenüber Isocyanatgruppen reaktiven Gruppen. Beispiele für solche Lösemittel sind die dem Fachmann bekannten typischen Lösemittel für Polyisocyanate.

Die Umsetzung der Zink(II)biscarboxylate mit dem Imidazol oder der Imidazolmischung kann jedoch auch in der Polyhydroxylgruppen-haltigen Komponente (A) und/oder in den als Komponente (C) aufgeführten niedermolekularen Alkoholen gegebenenfalls im Gemisch mit anderen gegenüber Isocyanaten inerten Lösemitteln erfolgen.

Die Umsetzung der Zink(II)biscarboxylate mit dem Imidazol oder der Imidazolmischung erfolgt üblicherweise bei Raumtemperatur (20 °C) oder erhöhter Temperatur von bis zu 100 °C. Dabei wird in der Regel das Zink(II)biscarboxylat im Lösemittel beziehungsweise den Komponenten (A) und/oder (C) vorgelegt und die Imidazolkomponente (gegebenenfalls gelöst in einem der vorgenannten Lösemittel), langsam zugetropft. Die entstehende Wärmeentwicklung wird abgewartet, dann wird über einen Zeitraum von beispielsweise 2 Stunden bei erhöhter Temperatur von beispielsweise 60 °C oder mehr weiter gerührt.

In einer weiteren besonderen Ausführungsform ist es auch möglich, insbesondere dann, wenn es sich bei den Beschichtungsmitteln um zweikomponentige Beschichtungsmittel handelt, den Zink-Imidazol-Carboxylat-Komplex (D) in situ herzustellen. Dazu wird eine entsprechende Menge des Imidazols oder der Imidazolmischung in dem hydroxylgruppenhaltigen Bindemittel (A) und gegebenenfalls (C) vorgelegt und eine entsprechende Menge des Zn(II)biscarboxylates in der polyisocyanathaltigen Komponente (B). Das erfindungsgemäße Beschichtungsmittel wird dann durch Vermischen der das Imidazol enthaltenden hydroxylgruppenhaltigen Bindemittelkomponente (A) sowie gegebenenfalls (C) und der zunächst getrennt gelagerten polyisocyanathaltigen Komponente (B), die auch das Zn(II)biscarboxylat enthält, hergestellt.

Es ist ferner erfindungswesentlich, dass das Beschichtungsmittel mindestens eine monomere aromatische, ggf. substituierte Carbonsäure (S) enthält, deren Carboxylgruppe in Konjugation zu einem pi-Elektronensystem steht. Dabei kann die Anzahl der Carboxylgruppen variieren, wobei die Carbonsäuren bevorzugt eine Carboxylgruppe aufweisen. Bevorzugt weisen die monomeren aromatischen, ggf. substituierten Carbonsäuren (S) ein Molekulargewicht < 500 g/mol, besonders bevorzugt < 300 g/mol, auf. Bevorzugt werden monomere aromatische, ggf. substituierte Carbonsäuren (S) eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO gewählt oder aber ein anderes geeignetes Medium, in dem die Säure löslich ist.

Geeignet sind monomere aromatische Mono- und Polycarbonsäuren, die entsprechenden Alkyl- und Aryl-substituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, Alkyl- bzw. Aryl-substituierte Phthalsäure und Terephthalsäure, Benzoesäure und Alkyl- bzw. Aryl-substituierte Benzoesäure, aromatische Carbonsäuren mit weiteren funktionellen Gruppen wie Salicylsäure und Acetylsalicylsäure, Alkyl- bzw. Aryl-substituierte Salicylsäure oder Isomere davon, mehrkernige aromatische Carbonsäuren, wie die Isomeren der Naphthalincarbonsäure und deren Derivate.

Bevorzugt enthält das Beschichtungsmittel als monomere aromatische Carbonsäure (S) Benzoesäure, tert.-Butylbenzoesäure, 3,4-Dihydroxybenzoesäure, Salicylsäure und/oder Acetylsalicylsäure, besonders bevorzugt Benzoesäure.

Handelt es sich um einkomponentige Beschichtungsmittel, so werden Polyisocyanatgruppen-haltige Verbindungen (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

Bei den erfindungsgemäß besonders bevorzugten 2-komponentigen (2K) Beschichtungsmitteln wird kurz vor der Applikation des Beschichtungsmittel eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppenhaltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den wie oben definierten Zink-Imidazol-Carboxylat-Komplex (D) sowie einen Teil des gegebenenfalls vorhandenen Lösemittels enthält.

Die Gewichtsanteile der Polyhydroxylgruppen-haltigen Komponete (A) und ggf. (C) und der Polyisocyanatgruppen-haltigen Komponente (B) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittel eingesetzt, die von 30 bis 80 Gew.-%, bevorzugt von 50 bis 70 Gew.-%, jeweils bezogen auf den Bindemittelgehalt des Beschichtungsmittels, mindestens einer Polyhydroxylgruppen-haltigen Komponente (A) enthalten, bevorzugt mindestens eines Polyhydroxylgruppen-haltigen Polyacrylates (A) und/oder mindestens eines Polyhydroxylgruppen-haltigen Polymethacrylates (A) enthalten.

Ebenfalls bevorzugt werden erfindungsgemäß Beschichtungsmittel eingesetzt, die von 5 bis 50 Gew.-%, bevorzugt von 25 bis 40 Gew.-%, jeweils bezogen auf den Bindemittelgehalt des Beschichtungsmittels, der Polyisocyanatgruppen-haltigen Komponente (B) enthalten.

Bevorzugt enthalten die erfindungsgemäßen Beschichtungsmittel den wie oben definierten Zink-Imidazol-Carboxylat-Komplex (D) in einer solchen Menge, dass der Zinkgehalt des Komplexes, jeweils bezogen auf den Bindemittelgehalt des Beschichtungsmittels, zwischen 35 und 2000 ppm, bevorzugt zwischen 35 und 1000 ppm und besonders bevorzugt zwischen 100 und 1000 ppm, liegt.

Bevorzugt enthalten die erfindungsgemäßen Beschichtungsmittel außerdem 0,2 bis 15,0 Gew.-%, bevorzugt 0,5 bis 8,0 Gew.-% und besonders bevorzugt 0,5 bis 5,0 Gew.-%, mindestens einer monomeren aromatischen Carbonsäure (S), wobei die Gew.-%-Angaben jeweils bezogen sind auf den Bindemittelgehalt des Beschichtungsmittels.

Besonders bevorzugt handelt es sich bei der Beschichtungsmittelzusammensetzung um ein 2-Komponenten-System, dadurch gekennzeichnet, dass die mindestens eine Polyisocyanatgruppen-haltige Komponente (B) getrennt von der mindestens einen Polyhydroxylgruppen-haltigen Komponente (A) gelagert wird und die Komponenten erst kurz vor Verarbeitung miteinander vermischt werden.

Sowohl der wie oben definierte Zink-Imidazol-Carboxylat-Komplex (D) als auch die monomere aromatische Carbonsäure (S) können im Falle eines 2-Komponenten-Systems in beiden Komponenten enthalten sein, bevorzugt enthält nur eine Komponente die genannten Substanzen, bevorzugt sind sowohl monomere aromatische Carbonsäure (S) als auch der Zink-Imidazol-Carboxylat-Komplex (D) in der Polyolkomponente gelöst.

Des Weiteren kann auch das Imidazol der allgemeinen Formel (I) in der Polyolkomponente gelöst sein und die Zink-Bis(Carboxylat)-Komponente in der Polyisocyanatkomponente. Erst nach Vermischen der Polyisocyanatkomponente und der Polyolkomponente wird dann in situ der aktive Zink-Imidazol-Carboxylat-Komplex (D) gebildet.

Die Beschichtungsmittel sind bevorzugt nichtwässrige Beschichtungsmittel. Die Beschichtungsmittel können Lösemittel enthalten oder als lösemittelfreie Systeme formuliert sein Beispiele für geeignete Lösemittel sind die bereits bei der Polyhydroxylgruppen-haltigen Verbindung (A) und ggf. (C) und bei der Polyisocyanatgruppen-haltigen Verbindung (B) aufgeführten Lösemittel. Das bzw. die Lösemittel werden in den erfindungsgemäßen Beschichtungsmitteln bevorzugt in einer solchen Menge eingesetzt, dass der Festkörpergehalt des Beschichtungsmittels mindestens 50 Gew.-%, besonders bevorzugt mindestens 60 Gew.-% beträgt.

Weiterhin können die erfindungsgemäßen Beschichtungsmittel 0 bis 30 Gew.-%, bevorzugt 0 bis 15 Gew.-%, jeweils bezogen auf den Bindemittelgehalt des Beschichtungsmittels, eines oder mehrerer Aminoplastharze und/oder eines oder mehrerer Tris(Alkoxycarbonylamino)Triazine (E) enthalten.

Beispiele für geeignete Tris(Alkoxycarbonylamino)Triazine sind in der US-A-4 939 213, der US-A- 5 084 541 und der EP-A-0 624 577 genannt.

Beispiele für geeignete Aminoplastharze (E) sind alle im Bereich der Lackindustrie üblicherweise eingesetzten Aminoplastharze, wobei über die Reativität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

Darüber hinaus kann die erfindungsgemäße Bindemittelmischung bzw. das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf den Bindemittelgehalt des Beschichtungsmittels, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (C) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel.

Besonders bevorzugt sind Beschichtungsmittel, die
50 bis 70 Gew.-%, bezogen auf den Bindemittelgehalt des Beschichtungsmittels, mindestens eines Polyhydroxylgruppen-haltigen Polyacrylates (A) und/oder mindestens eines Polyhydroxylgruppen-haltigen Polymethacrylates (A),
25 bis 40 Gew.-%, bezogen auf den Bindemittelgehalt des Beschichtungsmittels, der Polyisocyanatgruppen-haltigen Verbindung (B),
0 bis 10 Gew.-%, bezogen auf den Bindemittelgehalt des Beschichtungsmittels, der hydroxylgruppen-haltigen Komponente (C),
0,5 bis 5,0 Gew.-%, bezogen auf den Bindemittelgehalt des Beschichtungsmittels, mindestens einer monomeren aromatischen Carbonsäure (S),
0 bis 15 Gew.-%, bezogen auf den Bindemittelgehalt des Beschichtungsmittels, eines oder mehrerer Aminoplastharze und/oder eines oder mehrerer Tris(Alkoxycarbonylamino)Triazine (E) und
0 bis 20 Gew.-%, bezogen auf den Bindemittelgehalt des Beschichtungsmittels, mindestens eines üblichen und bekannten Lackadditivs (F) enthalten und
mindestens einen wie oben definierten Zink-Imidazol-Carboxylat-Komplex (D) in einer solchen Menge enthalten, dass der Zinkgehalt des Zink-Imidazol-Carboxylat-Komplexes (D), jeweils bezogen auf den Bindemittelgehalt des Beschichtungsmittels, zwischen 100 und 1000 ppm liegt.

In einer weiteren Ausführungsform der Erfindung kann die erfindungsgemäße Bindemittelmischung bzw. das erfindungsgemäße Beschichtungsmittel noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05 : 1 und 1,5 : 1 liegt, jeweils bezogen auf den Bindemittelgehalt des Beschichtungsmittels.

Des Weiteren betrifft die Erfindung die erfindungsgemäße Verwendung eines Katalysatorsystems, umfassend mindestens einen wie oben definierten Zink-Imidazol-Carboxylat-Komplex (D) und mindestens eine monomere aromatische Carbonsäure (S), bei der die Carboxylgruppe in Konjugation zu einem pi-Elektronensystem steht, zur Katalyse der Urethanreaktion in Beschichtungsmittelzusammensetzungen, die mindestens eine Polyisocyanatgruppen-haltige Komponente und mindestens eine Polyhydroxylgruppen-haltige Komponente enthalten. Das Katalysatorsystem zeichnet sich durch die kombinierte Verwendung von dem mindestens einen wie oben defnierten Zink-Imidazol-Carboxylat-Komplex (D) und der mindestens einen monomeren aromatischen Carbonsäure (S), bei der die Carboxylgruppe in Konjugation zu einem pi-Elektronensystem steht, aus. Vorzugsweise wird die Katalysereaktion bei 20 bis 60°C durchgeführt Vorzugsweise enthalten die Beschichtungsmittelzusammensetzungen die vorher beschriebene mindestens eine Polyhydroxylgruppen-haltige Komponente (A) und die mindestens eine Polyisocyanatgruppen-haltige Komponente (B).

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich für jegliche Art von Beschichtungen, wie für Elektrotauchlacke, Coil Coating Lacke, Drahtlacke und Automobillacke als pulverförmige, lösungsmittelhaltige, lösungsmittelfreie und wässrige Beschichtungsmittel. Bevorzugt werden die Lacke als hochwertige Beschichtung von Gegenständen aller Art eingesetzt, wo es entweder aus technischen oder aus wirtschaftlichen Gründen nicht möglich ist, die Lacke bei hohen Temperaturen zu trocknen. Zum Einsatz kommen diese Systeme sowohl in Grundierungen als auch in Decklacksystemen. Diese Decklacksysteme können pigmentiert sein oder auch als unpigmentierte Systeme (= Klarlacke) zu Einsatz kommen. Besonders bevorzugt werden die erfindungsgemäßen Beschichtungsmittelzusammensetzungen in der Autoreparaturlackierung eingesetzt, bevorzugt als Automobildecklacke (Uni + CC).

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeugen, wie Motorrädern, Bussen, Lastkraftwagen oder Personenkraftwagen) oder von Teilen hiervon; von Bauwerken im Innen- und Außenbereich; von Möbeln, Fenstern und Türen; von Kunststoffformteilen, insbesondere CompactDisks und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittel können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.ä., sowie der Automobilreparaturlackierung und der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA (Acrylnitril-Styrol-Acrylester), Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die bevorzugt dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird das erfindungsgemäße Beschichtungsmittel als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit den erfindungsgemäßen Beschichtungsmittel aufgetragen werden.

Des Weiteren betrifft die Erfindung Beschichtungen, die aus den erfindungsgemäßen Beschichtungsmittelzusammensetzungen hergestellt wurden bzw. die unter Verwendung eines Katalysatorsystems aus mindestens einem wie oben definierten Zink-Imidazol-Carboxylat-Komplex (D) und mindestens einer aromatischen Carbonsäure (S), bei der die Carboxylgruppe in Konjugation zu einem pi-Elektronensystem steht, in Kombination hergestellt wurden. Vorzugsweise finden diese Beschichtungen Anwendung im Automobilbereich. Die Beschichtungen können auch zur Herstellung von Mehrschichtlackierungen dienen. So dass die Erfindung außerdem Mehrschichtsysteme beschreibt, die mindestens eine erfindungsgemäße Beschichtung enthalten. Vorzugsweise handelt es sich bei den Mehrschichtsystemen um Automobillackierungen.

Die vorliegende Erfindung wird anhand der folgenden Beispiele erläutert.

### Beispiele:

### Gelpermeationschromatoaraphie (GPC)

Die Gelpermeationschromatographie wurde bei 40°C mit einer Hochdruckflüssigkeitschromatographie-Pumpe und einem Brechungsindexdetektor durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht Mn, das gewichtsmittlere Molekulargewicht Mw und Mp wurden bestimmt, wobei sich der Polymolekularitätsindex Mp berechnet aus Mp = Mw/Mn.

### Hydroxylzahl/Säurezahl:

Die Hydroxylzahl wird über den eingesetzten Anteil an OH-funktionellen Komponenten berechnet und in mg KOH pro Gramm Festharz angegeben. Die Hydroxylzahl (OH-Zahl) gibt an, wie viel mg Kaliumhydroxid der Essigsäure-Menge äquivalent sind, die von 1 g Substanz bei der Acetylierung gebunden wird.

Die Säurezahl gibt hierbei die Anzahl der mg Kaliumhydroxid an, die zur Neutralisation von 1 g der jeweiligen Verbindung verbraucht wird (DIN EN ISO 2114).

### Festkörperbestimmung

Ca. 1 g Probe werden in einem Weißblechdeckel eingewogen. Nach Zugabe von ca. 3 ml Butylacetat wird die Probe im Trockenschrank für 60 Minuten bei 130°C getrocknet, im Exsikkator abgekühlt, und dann zurückgewogen. Der Rückstand entspricht dem Festkörperanteil.

### Bindemittelgehaltbestimmung

Unter Bindemittelanteil ist jeweils der in Tetrahydrofuran (THF) lösliche Anteil des Beschichtungsmittels vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

### Klebfreiheit mittels Zapon-Tack Test (ZTT):

Ein Aluminiumstreifen einer Dicke von 0,5 mm, einer Breite von 2,5 cm und einer Länge von 11 cm wird so in einem 110° Winkel gebogen, dass eine Fläche von 2,5 X 2,5 cm entsteht. Die lange Seite des Bleches wird nach weiteren 2,5 cm um ca 15° so gebogen, dass das Blech durch ein auf der quadratischen Fläche zentriert platziertes Gewicht (5g) gerade in Balance gehalten wird. Zur Messung der Klebfreiheit nach ZTT wird das gebogene Blech auf dem Lackfilm platziert und für 30 s mit einem Gewicht von 100g beschwert. Nach Entfernung des Gewichtes wird der Lack als klebfrei angesehen, wenn der Blechwinkel innerhalb von 5 s umfällt. Der Test wird in Abständen von 15 Minuten wiederholt. Vor Einsatz des Tests wird die Klebrigkeit des Lackfilms qualitativ durch Berührung beurteilt. Bei Prüfungen mit erhöhter Temperatur werden die Prüftafeln vor Beginn der Prüfung zur Abkühlung 10 Minuten bei Raumtemperatur gelagert.

### Print-Test:

Der Lackfilm wird mittels 100 micrometer-Rakel auf eine Glastafel aufgezogen. Nach Trocknung für 30 Minuten bei 60 °C wird innerhalb von 10 Minuten nach Entnahme aus dem Ofen die Glastafel auf eine handelsüblichen Laborwaage aufgelegt. Mittels Daumendruck wird der Film dann für 20 s mit einem Gewicht von 2 kg belastet. Diese Prüfung wird alle 10 Minuten wiederholt. Bei offensichtlich noch weichem oder klebrigem Lackfilm wird zunächst abgewartet, bis der Lackfilm eine ausreichende Klebfreiheit und Härte erreicht hat. Die Auswertung der Versuche wird nach einer Lagerzeit von 24 Stunden vorgenommen. Dazu wird die Lackoberfläche mit einer wässrigen Tensidlösung (Handelsübliches Spülmittel) und einem weichen Tuch abgewaschen, um Fettmarkierungen zu eliminieren. Der Lack wird als in Ordnung angesehen, wenn kein Daumenabdruck auf dem Lackfilm sichtbar ist. Diese Prüfung ist ein Maß für die Montagefestigkeit von Reparaturlackierungen, d.h. je früher der Lackfilm seine Montagefestigkeit nach forcierter Trocknung erreicht hat, um so eher kann mit Montagearbeiten (bzw. Demontagearbeiten von Abklebungen) an der reparierten Karosserie begonnen werden.

### Drying recorder:

Auf Glastafeln der Dimension 280 mm x 25 mm wird der Lack mittels 100 micrometer-Rakel aufgezogen. Mit Hilfe des Byk-Dry-time Recorders werden Nadeln mit einer definierten Geschwindigkeit über den Film gezogen. Dabei werden 3 verschieden Phasen sowie die Gesamtlänge (= Summe aus Phase 1 + Phase 2 + Phase 3) der Spur beurteilt.
Phase 1: Die Nadelspur läuft wieder zu
Phase 2: Die Nadelspur führt zu eine tiefgehenden Furche im Lackfilm
Phase 3: Die Nadel verletzt den Film nur oberflächlich

Die Beurteilung wird immer gegen einen Standard vorgenommen.

### Stammlack:

86,4 g eines styrolhaltigen Polyacrylates (62%ig in Solventnaptha®/Ethoxyethylpropionat/Methylisobutylketon (20/46/34)) mit einem Molekulargewicht von 1600 - 2200 (Mn) und 4000 - 5000 (Mw), einer gemessenen Säurezahl von 12-16 mg KOH/g, einer berechneten OH-Zahl (OHZ) von ca 130 mg KOH/g (Festharz) und einer Viskosität der 60%igen Lösung in Butylacetat von 200 - 400 mPa.s, gemessen mit einem Rotationsviskosimeter (Brookfield CAP 2000, Spindel 3, 1000RPM), werden mit 6,4 g Methylisobutylketon, 2,2 g eines handelsüblichen Lichtschutzmittelgemisches bestehend aus UV- und HALS Lichtschutzmittel sowie 0,15 g eines handelsüblichen Verlaufsmittels auf Basis eines Polyacrylates zu einer homogenen Mischung verrührt. In dieser Mischung entsprechend der Angaben in Tabelle 1 zunächst die angegebene Menge des jeweiligen Imidazolderivates gelöst, anschließend wird die angegebene Menge Zink(2-ethylhexanoat)₂ zugegeben. Man läßt die Stammlackmischung 24h bei Raumtemperatur ruhen.

### Härterlösung:

In einer Mischung von 5,17 Teilen Xylol, 10,3 Teilen Butylacetat, 1,51 Teilen Ethylethoxypropionat, 8,03 Teilen Methylisobutylketon sowie 0,310 Teilen eines handelsüblichen Verlaufsmittels auf Basis eine Polyacrylates (55%ig in Solventnaphtha®) werden 28,12 g trimerisiertes, Isocyanuratgruppen aufweisendes Hexamethylendiisocyanat (HDI) mit einem Isocyanatgehalt von 22,0 %, bezogen auf das lösemittelfreie trimerisierte Hexamethylendiisocyanat, gelöst.

### Versuchsdurchführung:

Zusätzliche Komponenten wie Benzoesäure und Katalysatorkomponenten werden im Stammlack aufgelöst. Nach leichtem Rühren erhält man klare Lösungen. Zur Versuchsdurchführung wird der Stammlack vorgelegt und der Härter zugegeben. Die Lösung wird durch Rühren homogenisiert. Für die Viskositätsmessungen auf die angegebene Viskosität durch Lösemittelzugabe eingestellt. Für die Glasaufzüge verzichtet man auf die Einstellung der Viskosität. Zur Trocknungsprüfung wird der Lackfilm auf Glastafeln mittels einer 100 micrometer-Kastenrakel aufgezogen, so dass eine Filmschichtdicke von 30 - 35 micrometer erreicht wird. Für die Prüfung der Pendelhärte wird der Film auf Glastafeln aufgegossen, vor Bestimmung der Filmhärte nach Koenig wird die Schichtdicke des aufgezogenen Films am Ritz (DIN 50933) bestimmt. Für die Prüfungen mittels Drying recorder werden die Proben ebenfalls mit einer 100 micrometer-Kastenrakel auf geeignete Glasstreifen von ca. 280 mm Länge und ca. 25 mm Breite aufgezogen; die damit erreichten Schichtdicken liegen bei 30-35 micrometer.

Tabelle 1 zeigt die Eigenschaften der erfindungsgemäßen Beispiele im Vergleich zu einer Standardformulierung eines mit DBTL katalysierten 2K-Polyurethanklarlackes.

**Tabelle 1**

| **Beispiel** | **V0** | **E1** | **E2** | **E3** | **E4** | **E5** |
|---|---|---|---|---|---|---|
| Stammlack | 95,15 | 95,15 | 95,15 | 95,15 | 95,15 | 95,15 |
| Dibutylzinndilaurat | 0,06 | | | | | |
| Benzoesäure | 1,5 | 1,5 | 1,5 | 1,5 | 1,5 | 1,5 |
| 1,1-Methylen-bis-imidazol | | 0,055 | | | | |
| 1-Benzyl-imidazol | | | 0,153 | | | |
| 1-Butyl-imidazol | | | | 0,113 | | |
| 1-Hydroxyethyl-imidazol | | | | | 0,096 | |
| 1,2-Dimethylimidazol | | | | | | 0,077 |
| Zink-(2-ethylhexanoat)₂ | | 0,13 | 0,17 | 0,16 | 0,15 | 0,14 |
| Härterlösung | 53,38 | 53,38 | 53,38 | 53,38 | 53,38 | 53,38 |
| Metallgehalt [ppm] | 72 | 161 | 210 | 198 | 186 | 175 |

| **Potlife DIN 4 [s]** | | | | | | |
|---|---|---|---|---|---|---|
| direkt | 25 | 24 | 23 | 23 | 23 | 21 |
| nach 1h | 30 | 35 | 34 | 27 | 28 | 28 |
| nach 2h | 38 | 61 | 54 | 33 | 37 | 43 |
| nach 3h | 64 | | | 42 | 53 | |

| **ZAPON-Tack** | | | | | | |
|---|---|---|---|---|---|---|
| 30'60°C/10'RT [min] | 0 | 0 | 0 | 15 | 0 | 0 |
| RT [min] | 160 | 330 | 210 | 210 | 330 | 210 |

| **Pendeldämpfung nach König in Schlägen** | | | | | | |
|---|---|---|---|---|---|---|
| 23°C RT nach 1 d | 102 | 67 | 61 | 111 | 111 | 64 |
| 23°C RT nach 7d | 131 | 91 | 74 | 137 | 141 | 83 |
| 30'60°C nach 1 d | 83 | 137 | 146 | 78 | 139 | 146 |
| 30'60°C nach 7d | 95 | 141 | 155 | 88 | 154 | 153 |
| **Print - Test - 15 min 60°C /10 min RT [min]** | 100 | 320 | 120 | 120 | 320 | 140 |

Die Versuche E1 - E5 wurden wiederholt mit dem Unterschied, daß nun keine Benzoesäure zugesetzt wurde.

Tabelle 2 zeigt die erreichten Werte für die Klebfreiheiten nach dem Print-Test⁵⁾ erreicht wurden.

**Tabelle 2**

| **Beispiel** | **V1** | **V2** | **V3** | **V4** | **V5** |
|---|---|---|---|---|---|
| **Print-Test-15 min 60°C 10 min RT [min]** | >360 | >360 | 320 | >360 | >360 |

Diskussion: In den Versuchen zeigt sich, dass durch Kombination der Zink-Imidazol-Carboxylat-Komplexe der Erfindung mit der Benzoesäure eine deutlich frühere Montagefestigkeit zu erreichen ist als ohne Benzoesäure.

## Patentansprüche

1. Beschichtungsmittelzusammensetzung, enthaltend
- mindestens eine Polyhydroxylgruppen-haltige Komponente (A),
- mindestens eine Polyisocyanatgruppen-haltige Komponente (B),
- mindestens einen Zink-Imidazol-Carboxylat-Komplex (D) herstellbar durch Umsetzung mindestens eines Zn(II)biscarboxylates mit einem oder mehreren Imidazolen der allgemeinen Formel (I) 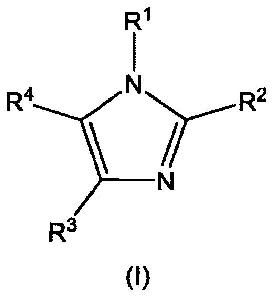 worin
R¹ für einen acyclischen oder cyclischen, gesättigten oder ungesättigten Kohlenwasserstoffrest, einen aromatischen Kohlenwasserstoffrest oder einen Rest R^{v}-Aryl steht, wobei R^{v} für einen Alkylenrest und Aryl für einen aromatischen Rest steht, und wobei sämtliche vorgenannten Reste Heteroatome enthalten können,
R², R³ und R⁴ unabhängig voneinander für Wasserstoff, einen acyclischen oder cyclischen, gesättigten oder ungesättigten Kohlenwasserstoffrest, einen aromatischen Kohlenwasserstoffrest oder einen Rest R^{v}-Aryl stehen, wobei R^{v} für einen Alkylenrest und Aryl für einen aromatischen Rest steht, und wobei sämtliche vorgenannten Reste Heteroatome enthalten können, mit der Maßgabe, dass Zink-(1-Methylimidazol)-bis(2-Ethylhexanoat)-Komplexe (D), die durch Umsetzung von Zink(II)bis(2-Ethylhexanoat) mit 1-Methylimidazol in einem Molverhältnis von 1 zu ≤ 2,2 erhältlich sind, ausgeschlossen sind, und
- mindestens eine monomere aromatische Carbonsäure (S), bei der die Carboxylgruppe in Konjugation zu einem pi-Elektronensystem steht.

2. Beschichtungsmittelzusammensetzung gemäß Anspruch 1, **dadurch gekennzeichnet, dass** ein Poly(meth)acrylatpolyol und/oder ein Polyesterharz als mindestens eine Polyhydroxylgruppen-haltige Komponente (A) enthalten ist.

3. Beschichtungsmittelzusammensetzung gemäß einer der Ansprüche 1 oder 2, **dadurch gekennzeichnet, dass** die Beschichtungsmittelzusammensetzung als Polyisocyanatgruppen-haltige Komponente (B) 1,6-Hexamethylendiisocyanat, Isophorondiisocyanat, oder 4,4'-Methylendicyclohexyldiisocyanat, deren Biuret-Dimere und/oder deren Isocyanurat-Trimere und/oder deren asymmetrische Trimere enthält.

4. Beschichtungsmittelzusammensetzung gemäß einer der Ansprüche 1 bis 3, **dadurch gekennzeichnet, dass** als mindestens eine monomere aromatische Carbonsäure (S) Benzoesäure, tert.-Butylbenzoesäure, 3,4-Dihydroxybenzoesäure, Salicylsäure und/oder Acetylsalicylsäure enthalten ist.

5. Beschichtungsmittelzusammensetzung gemäß einer der Ansprüche 1 bis 4, **dadurch gekennzeichnet, dass** die Beschichtungsmittelzusammensetzung den mindestens einen Zink-Imidazol-Carboxylat-Komplex (D) in einer solchen Menge enthält, dass der Metallgehalt des Zink-Imidazol-Carboxylat-Komplex (D), jeweils bezogen auf den Bindemittelanteil des Beschichtungsmittels, zwischen 35 und 2000 ppm liegt und/oder das Beschichtungsmittel 0,2 bis 15,0 Gew.-% mindestens einer monomeren aromatischen Carbonsäure (S) enthält, wobei die Gew.-%-Angaben wiederum jeweils bezogen sind auf den Bindemittelanteil des Beschichtungsmittels.

6. Beschichtungsmittelzusammensetzung gemäß einer der Ansprüche 1 bis 5, **dadurch gekennzeichnet, dass** die Beschichtungsmittelzusammensetzung noch ein oder mehrere, von der Komponente (A) verschiedene, hydroxylgruppenhaltige Verbindungen (C) enthält und/oder dass das molare Äquivalentverhältnis der Hydroxylgruppen der hydroxylgruppenhaltigen Verbindung (A) plus ggf. (C) zu den Isocyanatgruppen der Komponente (B) zwischen 1:0,9 und 1 :1,5 liegt.

7. Beschichtungsmittelzusammensetzung gemäß einer der Ansprüche 1 bis 6, **dadurch gekennzeichnet, dass** es ein nicht wässriges Beschichtungsmittel ist und/oder dass es Pigmente enthält.

8. Verwendung mindestens eines Zink-Imidazol-Carboxylat-Komplexes (D) und mindestens einer monomeren aromatischen Carbonsäure (S), bei der die Carboxylgruppe in Konjugation zu einem pi-Elektronensystem steht, als Katalysatorsystem zur Katalyse der Urethanreaktion in Beschichtungsmittelzusammensetzungen, die mindestens eine Polyisocyanatgruppen-haltige Komponente und mindestens eine Polyhydroxylgruppen-haltige Komponente enthalten, wobei der Zink-Imidazol-Carboxylat-Komplex (D) herstellbar ist durch Umsetzung mindestens eines Zn(II)biscarboxylates mit einem oder mehreren Imidazolen der allgemeinen Formel (I) 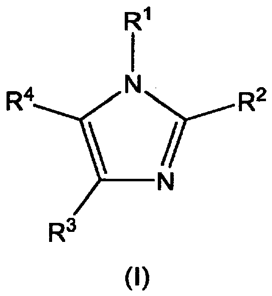 worin
R¹ für einen acyclischen oder cyclischen, gesättigten oder ungesättigten Kohlenwasserstoffrest, einen aromatischen Kohlenwasserstoffrest oder einen Rest R^{v}-Aryl steht, wobei R^{v} für einen Alkylenrest und Aryl für einen aromatischen Rest steht, und wobei sämtliche vorgenannten Reste Heteroatome enthalten können,
R², R³ und R⁴ unabhängig voneinander für Wasserstoff, einen acyclischen oder cyclischen, gesättigten oder ungesättigten Kohlenwasserstoffrest, einen aromatischen Kohlenwasserstoffrest oder einen Rest R^{v}-Aryl stehen,
wobei R^{v} für einen Alkylenrest und Aryl für einen aromatischen Rest steht,
und wobei sämtliche vorgenannten Reste Heteroatome enthalten können, mit der Maßgabe, dass Zink-(1-Methylimidazol)-bis(2-Ethylhexanoat)-Komplexe (D), die durch Umsetzung von Zink(II)bis(2-Ethylhexanoat) mit 1-Methylimidazol in einem Molverhältnis von 1 zu ≤ 2,2 erhältlich sind, ausgeschlossen sind.

9. Verwendung eines Katalysatorsystems gemäß Anspruch 8, **dadurch gekennzeichnet, dass** die Beschichtungsmittelzusammensetzung mindestens eine Polyhydroxylgruppen-haltige Komponente (A) und mindestens eine Polyisocyanatgruppen-haltige Komponente (B) enthalten und/oder die Katalyse bei 20 bis 60°C durchgeführt wird.

10. Beschichtungsverfahren, **dadurch gekennzeichnet, dass** eine Schicht aus einer Beschichtungsmittelzusammensetzung gemäß einem der Ansprüche 1 bis 7 bzw. eine Schicht unter Verwendung eines Katalysatorsystems gemäß einem der Ansprüche 8 oder 9 hergestellt wird, vorzugsweise im Automobilbereich und/oder im Bereich der Nutzfahrzeuge, bevorzugt für eine Automobilreparaturlackierung.

11. Mehrstufiges Beschichtungsverfahren, **dadurch gekennzeichnet, dass** auf ein gegebenenfalls vorbeschichtetes Substrat eine pigmentierte Basislackschicht und danach eine Schicht aus einer Beschichtungsmittelzusammensetzung nach einem der Ansprüche 1 bis 7 bzw. eine Schicht unter Verwendung eines Katalysatorsystems gemäß einem der Ansprüche 8 oder 9 aufgetragen wird oder dass auf ein gegebenenfalls vorbeschichtetes Substrat eine pigmentierte oder unpigmentierte Schicht aus dem Beschichtungsmittel nach einem der Ansprüche 1 bis 7 bzw. eine pigmentierte oder unpigmentierte Schicht unter Verwendung eines Katalysatorsystems gemäß einem der Ansprüche 8 oder 9 aufgetragen wird.

12. Mehrstufiges Beschichtungsverfahren nach Anspruch 11, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 7 bzw. nach Auftragung einer Schicht unter Verwendung eines Katalysatorsystems gemäß einem der Ansprüche 8 oder 9 bei Temperaturen zwischen 20 und 80°C, insbesondere zwischen 20 und 60°C, gehärtet wird.

13. Verwendung der Beschichtungsmittelzusammensetzung nach einem der Ansprüche 1 bis 7 als Klarlack oder pigmentierter Lack für die Automobilreparaturlackierung und/oder für die Beschichtung von Automobilanbauteilen und/oder Kunststoffsubstraten und/oder Nutzfahrzeugen.

14. Anwendung des Verfahrens nach Anspruch 11 oder 12 für die Automobilreparaturlackierung und/oder für die Beschichtung von Kunststoffsubstraten und/oder Nutzfahrzeugen.

15. Beschichtung, die mindestens eine Schicht aus einer Beschichtungsmittelzusammensetzung gemäß einem der Ansprüche 1 bis 7 bzw. mindestens eine Schicht hergestellt unter Verwendung eines Katalysatorssystems gemäß einem der Ansprüche 8 oder 9 enthält und vorzugsweise im Automobilbereich Anwendung findet.

## Claims

1. Coating material composition comprising
- at least one polyhydroxyl group-containing component (A),
- at least one polyisocyanate group-containing component (B),
- at least one zinc-imidazole-carboxylate complex (D) preparable by reacting at least one Zn(II) biscarboxylate with one or more imidazoles of the general formula (I) 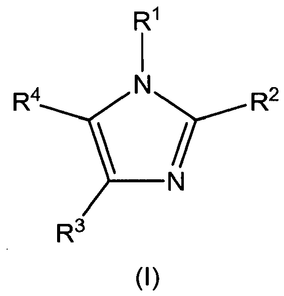 in which
R¹ is an acyclic or cyclic, saturated or unsaturated hydrocarbon radical, an aromatic hydrocarbon radical or a radical R^{v}-aryl, where R^{v} is an alkylene radical and aryl is an aromatic radical, and where all of the aforementioned radicals may contain heteroatoms,
R², R³ and R⁴ independently of one another are hydrogen, an acyclic or cyclic, saturated or unsaturated hydrocarbon radical, an aromatic hydrocarbon radical or a radical R^{v}-aryl, where R^{v} is an alkylene radical and aryl is an aromatic radical, and where all of the aforementioned radicals may contain heteroatoms,
with the proviso that
zinc-(1-methylimidazole)-bis(2-ethylhexanoate) complexes (D) which are obtainable by reacting zinc(II) bis(2-ethylhexanoate) with 1-methylimidazole in a molar ratio of 1 to ≤ 2.2 are excluded, and
- at least one monomeric aromatic carboxylic acid (S) in which the carboxyl group is in conjugation to a pi electron system.

2. Coating material composition according to Claim 1, **characterized in that** a poly(meth)acrylate polyol and/or a polyester resin is included as at least one polyhydroxyl group-containing component (A).

3. Coating material composition according to either of Claims 1 and 2, **characterized in that** the coating material composition comprises as polyisocyanate group-containing component (B) 1,6-hexamethylene diisocyanate, isophorone diisocyanate, or 4,4'-methylenedicyclohexyl diisocyanate, their biuret dimers and/or their isocyanurate trimers and/or their asymmetric trimers.

4. Coating material composition according to any of Claims 1 to 3, **characterized in that** said at least one monomeric aromatic carboxylic acid (S) comprises benzoic acid, tert-butylbenzoic acid, 3,4-dihydroxybenzoic acid, salicylic acid and/or acetylsalicylic acid.

5. Coating material composition according to any of Claims 1 to 4, **characterized in that** the coating material composition comprises the at least one zinc-imidazole-carboxylate complex (D) in an amount such that the metal content of the zinc-imidazole-carboxylate complex (D), based in each case on the binder fraction of the coating material, is between 35 and 2000 ppm, and/or the coating material comprises 0.2% to 15.0% by weight of at least one monomeric aromatic carboxylic acid (S), the percentages by weight again each being based on the binder fraction of the coating material.

6. Coating material composition according to any of Claims 1 to 5, **characterized in that** the coating material composition further comprises one or more hydroxyl-containing compounds (C) different from component (A) and/or **in that** the molar equivalent ratio of the hydroxyl groups of the hydroxyl-containing compound (A) plus where appropriate (C) to the isocyanate groups of component (B) is between 1:0.9 and 1:1.5.

7. Coating material composition according to any of Claims 1 to 6, **characterized in that** it is a nonaqueous coating material and/or **in that** it comprises pigments.

8. Use of at least one zinc-imidazole-carboxylate complex (D) and at least one monomeric aromatic carboxylic acid (S) in which the carboxyl group is in conjugation to a pi electron system as a catalyst system for catalysis of the urethane reaction in coating material compositions which comprise at least one polyisocyanate group-containing component and at least one polyhydroxyl group-containing component, the zinc-imidazole-carboxylate complex (D) being preparable by reacting at least one Zn(II) biscarboxylate with one or more imidazoles of the general formula (I) 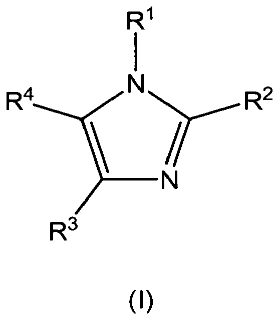 in which
R¹ is an acyclic or cyclic, saturated or unsaturated hydrocarbon radical, an aromatic hydrocarbon radical or a radical R^{v}-aryl, where R^{v} is an alkylene radical and aryl is an aromatic radical, and where all of the aforementioned radicals may contain heteroatoms,
R², R³ and R⁴ independently of one another are hydrogen, an acyclic or cyclic, saturated or unsaturated hydrocarbon radical, an aromatic hydrocarbon radical or a radical R^{v}-aryl, where R^{v} is an alkylene radical and aryl is an aromatic radical, and where all of the aforementioned radicals may contain heteroatoms,
with the proviso that zinc-(1-methylimidazole)-bis(2-ethylhexanoate) complexes (D) which are obtainable by reacting zinc(II) bis(2-ethylhexanoate) with 1-methylimidazole in a molar ratio of 1 to ≤ 2.2 are excluded.

9. Use of a catalyst system according to Claim 8, **characterized in that** the coating material composition comprises at least one polyhydroxyl group-containing component (A) and at least one polyisocyanate group-containing component (B) and/or the catalysis is carried out at 20 to 60°C.

10. Coating method **characterized in that** a coat is produced from a coating material composition according to any of Claims 1 to 7 and/or a coat is produced using a catalyst system according to either of Claims 8 and 9, preferably in the automobile sector and/or in the utility vehicles sector, more preferably for automotive refinish.

11. Multistage coating method **characterized in that**, to an uncoated or precoated substrate, a pigmented basecoat film and thereafter a coat of a coating material composition according to any of Claims 1 to 7, and/or a coat using a catalyst system according to either of Claims 8 and 9, is or are applied or **in that**, to an uncoated or precoated substrate, a pigmented or unpigmented coat of the coating material according to any of Claims 1 to 7, and/or a pigmented or unpigmented coat using a catalyst system according to either of Claims 8 and 9, is or are applied.

12. Multistage coating method according to Claim 11, **characterized in that**, following application of the pigmented basecoat film, the applied basecoat is first dried at temperatures from room temperature to 80°C and, following the application of the coating material according to any of Claims 1 to 7 and/or following application of a coat using a catalyst system according to either of Claims 8 and 9, is cured at temperatures between 20 and 80°C, more particularly between 20 and 60°C.

13. Use of the coating material composition according to any of Claims 1 to 7 as a clearcoat or pigmented paint for automotive refinish and/or for the coating of parts for installation in or on automobiles and/or plastics substrates and/or utility vehicles.

14. Application of the method according to Claim 11 or 12 for automotive refinish and/or for the coating of plastics substrates and/or utility vehicles.

15. Coating which comprises at least one coat of a coating material composition according to any of Claims 1 to 7 and/or at least one coat produced using a catalyst system according to either of Claims 8 and 9, and finds application preferably in the automobile sector.

## Revendications

1. Composition d'agent de revêtement, contenant
- au moins un composant (A) contenant des groupes polyhydroxyle,
- au moins un composant (B) contenant des groupes polyisocyanate,
- au moins un complexe d'imidazole-carboxylate de zinc (D) pouvant être préparé par transformation d'au moins un bis-carboxylate de Zn (II) avec un ou plusieurs imidazoles de formule générale (I) 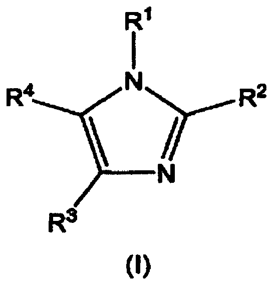 où
R¹ représente un radical hydrocarboné acyclique ou cyclique, saturé ou insaturé, un radical hydrocarboné aromatique ou un radical R^{v}-aryle, R^{v} représentant un radical alkylène, aryle représentant un radical aromatique et tous les radicaux susmentionnés pouvant contenir des hétéroatomes,
R², R³ et R⁴ représentent, indépendamment les uns des autres, hydrogène, un radical hydrocarboné acyclique ou cyclique, saturé ou insaturé, un radical hydrocarboné aromatique ou un radical R^{v}-aryle, R^{v} représentant un radical alkylène et aryle représentant un radical aromatique, et tous les radicaux susmentionnés pouvant contenir des hétéroatomes, à condition que les complexes de (1-méthylimidazole)-bis(2-éthylhexanoate) de zinc (D), qui peuvent être obtenus par transformation de bis(2-éthylhexanoate) de zinc (II) avec du 1-méthylimidazole dans un rapport molaire de 1 : ≤ 2,2, soient exclus, et
- au moins un acide carboxylique (S) monomère, aromatique, dont le groupe carboxyle est conjugué à un système d'électrons π.

2. Composition d'agent de revêtement selon la revendication 1, **caractérisée en ce qu'**elle contient un poly(méth)acrylate-polyol et/ou une résine de polyester comme au moins un composant (A) contenant des groupes polyhydroxyle.

3. Composition d'agent de revêtement selon l'une quelconque des revendications 1 ou 2, **caractérisée en ce que** la composition d'agent de revêtement contient, comme composant (B) contenant des groupes polyisocyanate, du diisocyanate de 1,6-hexaméthylène, du diisocyanate d'isophorone ou du diisocyanate de 4,4-méthylènedicyclohexyle, leurs dimères de biuret et/ou leurs trimères d'isocyanurate et/ou leurs trimères asymétriques.

4. Composition d'agent de revêtement selon l'une quelconque des revendications 1 à 3, **caractérisée en ce que** qu'elle contient, comme au moins un acide carboxylique (S) monomère, aromatique, de l'acide benzoïque, de l'acide tert-butylbenzoïque, de l'acide 3,4-dihydroxybenzoïque, de l'acide salicylique et/ou de l'acide acétylsalicylique.

5. Composition d'agent de revêtement selon l'une quelconque des revendications 1 à 4, **caractérisée en ce que** la composition d'agent de revêtement contient ledit au moins un complexe d'imidazole-carboxylate de zinc (D) en une quantité telle que la teneur en métal du complexe d'imidazole-carboxylate de zinc (D), à chaque fois par rapport à la proportion d'agent liant de l'agent de revêtement, est située entre 35 et 2000 ppm et/ou l'agent de revêtement contient 0,2 à 15,0% en poids d'au moins un acide carboxylique (S) monomère, aromatique, les indications de % en poids se rapportant à nouveau à chaque fois à la proportion de liant de l'agent de revêtement.

6. Composition d'agent de revêtement selon l'une quelconque des revendications 1 à 5, **caractérisée en ce que** la composition d'agent de revêtement contient encore un ou plusieurs composés (C) contenant des groupes hydroxyle, différents du composant (A) et/ou **en ce que** le rapport des équivalents molaires des groupes hydroxyle du composé contenant des groupes hydroxyle (A) plus le cas échéant (C) aux groupes isocyanate du composé (B) est situé entre 1:0,9 et 1:1,5.

7. Composition d'agent de revêtement selon l'une quelconque des revendications 1 à 6, **caractérisée en ce qu'**il s'agit d'un agent de revêtement non aqueux et/ou en ce qu'il contient des pigments.

8. Utilisation d'au moins un complexe d'imidazole-carboxylate de zinc (D) et d'au moins un acide carboxylique (S) aromatique monomère dont le groupe carboxyle est conjugué à un système d'électrons π, comme système catalytique pour la catalyse de la réaction d'uréthane dans des compositions d'agent de revêtement, qui contiennent au moins un composant contenant des groupes polyisocyanate et au moins un composant contenant des groupes polyhydroxyle, le complexe d'imidazole-carboxylate de zinc (D) pouvant être préparé par transformation d'au moins un bis-carboxylate de Zn (II) avec un ou plusieurs imidazoles de formule générale (I) 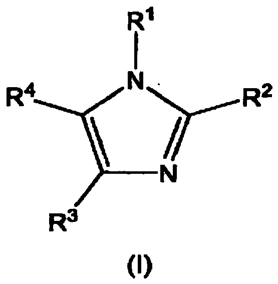 où
R¹ représente un radical hydrocarboné acyclique ou cyclique, saturé ou insaturé, un radical hydrocarboné aromatique ou un radical R^{v}-aryle, R^{v} représentant un radical alkylène, aryle représentant un radical aromatique et tous les radicaux susmentionnés pouvant contenir des hétéroatomes,
R², R³ et R⁴ représentent, indépendamment les uns des autres, hydrogène, un radical hydrocarboné acyclique ou cyclique, saturé ou insaturé, un radical hydrocarboné aromatique ou un radical R^{v}-aryle, R^{v} représentant un radical alkylène, aryle représentant un radical aromatique et tous les radicaux susmentionnés pouvant contenir des hétéroatomes,
à condition que les complexes de (1-méthylimidazole)-bis(2-éthylhexanoate) de zinc (D), qui peuvent être obtenus par transformation de bis(2-éthylhexanoate) de zinc (II) avec du 1-méthylimidazole dans un rapport molaire de 1 : ≤ 2,2, soient exclus.

9. Utilisation d'un système catalytique selon la revendication 8, **caractérisée en ce que** la composition d'agent de revêtement contient au moins un composant (A) contenant des groupes polyhydroxyle et au moins un composant (B) contenant des groupes polyisocyanate et/ou la catalyse est réalisée à 20 jusqu'à 60°C.

10. Procédé de revêtement, **caractérisé en ce qu'**on prépare une couche constituée par une composition d'agent de revêtement selon l'une quelconque des revendications 1 à 7 ou une couche avec utilisation d'un système catalytique selon l'une quelconque des revendications 8 et 9, de préférence dans le domaine automobile et/ou dans le domaine des véhicules utilitaires, de préférence pour un laquage de réparation de voitures.

11. Procédé de revêtement à plusieurs étapes, **caractérisé en ce qu'**on applique, sur un substrat le cas échéant revêtu au préalable, une couche de laque de base pigmentée, puis une couche constituée par une composition d'agent de revêtement selon l'une quelconque des revendications 1 à 7 ou une couche avec utilisation d'un système catalytique selon l'une quelconque des revendications 8 ou 9 ou **en ce qu'**on applique, sur un substrat le cas échéant revêtu au préalable, une couche pigmentée ou non pigmentée constituée par la composition d'agent de revêtement selon l'une quelconque des revendications 1 à 7 ou une couche pigmentée ou non pigmentée avec utilisation d'un système catalytique selon l'une quelconque des revendications 8 et 9.

12. Procédé de revêtement en plusieurs étapes selon la revendication 11, **caractérisé en ce qu'**après l'application de la couche de laque de base pigmentée, on sèche d'abord la couche de laque de base appliquée à des températures allant de la température ambiante à 80°C, et après l'application de l'agent de revêtement selon l'une quelconque des revendications 1 à 7 ou après l'application d'une couche avec utilisation d'un système catalytique selon l'une quelconque des revendications 8 ou 9, on durcit à des températures entre 20 à 80°C, en particulier entre 20 et 60°C.

13. Utilisation de la composition d'agent de revêtement selon l'une quelconque des revendications 1 à 7 comme laque claire ou laque pigmentée pour le laquage de réparation de voitures et/ou pour le revêtement de pièces automobiles et/ou de substrats en matériau synthétique et/ou de véhicules utilitaires.

14. Utilisation du procédé selon la revendication 11 ou 12 pour le laquage de réparation de voitures et/ou pour le revêtement de substrats en matériau synthétique et/ou de véhicules utilitaires.

15. Revêtement, qui contient au moins une couche constituée par une composition d'agent de revêtement selon l'une quelconque des revendications 1 à 7 ou au moins une couche préparée avec utilisation d'un système catalytique selon l'une quelconque des revendications 8 et 9 et de préférence utilisé dans le domaine automobile.
